# EUROPEAN PATENT APPLICATION

(11) **EP 4 137 396 A1**
(43) Date of publication of application: **22.02.2023**
(21) Application number: 21191662.2
(22) Date of filing: 17.08.2021
(51) Int. Cl.: B62K 3/00, B62M 1/18, B62M 11/02, B62M 13/00

(54) **BICYCLE**

(71) Applicant: Ata, Sanetaka, Yokohama-shi Kanagawa 227-0052 (JP)
(72) Inventor: Ata, Sanetaka, Yokohama-shi Kanagawa 227-0052 (JP)
(74) Representative: Weickmann & Weickmann PartmbB

(57) **Abstract**

An object of the present invention is to provide a manually driven bicycle which is capable of reducing the burden on the legs of the rider, in a case where the bicycle climbs the uphill slope by the rider's own weight being utilized.

There is provided an air conditioner comprising a bicycle comprises a body frame which fixedly supports a saddle, and rotatably supports rear and front wheels to transmit a driving force to said front wheel by pedaling a pedal by foot, further comprises a large gear which can be rotated integrally with said rear wheel and is provided concentrically with a rear wheel axle, and includes a diameter smaller than that of said rear wheel, a small gear which is provided so as to circumscribe said large gear at a level above the rear wheel axle , a small gear supporting bracket which is provided so as to swing about said rear wheel axle, and rotatably supports said small gear at its upper end, and includes a load receiving surface at its lower end, a load transmission unit which is downwardly movably supported to said body frame due to the downward load and adjustably movable in the longitudinal direction of the bicycle on said load receiving surface, a first sprocket which is provided concentrically with said small gear so as to be rotatable integrally with said small gear, a second sprocket which is rotatably provided at the position of the bicycle rear of said first sprocket and at the level lower than the rotation center of said first sprocket, a chain which is wound between said first and second sprockets to transmit the rotation force between said first and second sprockets, and a first rachet which is mounted on said small gear so as to restrict the rearward rotation of said rear wheel via said large gear.

## Description

### TECHNICAL FIELD

The present invention relates to a bicycle. More specifically, the present invention relates to the bicycle which is capable of reducing burden on legs of a rider in a manually driven bicycle by a weight of the rider being utilized, in a case where the bicycle climbs an uphill slope.

### BACKGROUND ART

Conventionally, a bicycle which can be manually driven by a rider has been widely used. The conventional bicycle includes pedals, a saddle, a body frame on which the pedal is operatively mounted, and supports the saddle, and front and rear wheels. The front and rear wheels are provided at the front and the rear part of the body frame, respectively, and the leg strength on the pedal by the rider is transmitted to the rear wheel via a chain wound between a front sprocket connected to the pedal and a rear sprocket which can be rotated integrally with the rear wheel, and thus the bicycle can be run.

In such a bicycle, in a case where the bicycle climbs an uphill slope, the leg strength by the rider is required, so that the physical burden is heavy for aged people. On the other hand, in a case where the bicycle goes down a downhill slope, although such a leg strength is not required, the speed of the bicycle is accelerated unless a manual brake is operated, which can cause a dangerous accident.

In this respect, the bicycle which can be driven by an electrical motor, an electrical hybrid bicycle which can be driven not only by the electrical motor, but also by the pedal, or an electric assisted bicycle which can be driven by the electric motor which is driven by the operation of the pedal, have been developed so far.

Thanks to these bicycles, the physical burden on the legs of the rider can be reduced in case of the uphill slope. However, a driving unit such as the electric motor, and a battery for driving the driving unit are required, so that cost of the bicycle is enhanced and the frequency of the maintenance and inspection of the bicycle is high.

In addition, the effect of reducing the burden on the legs of the rider can be offset by the increase of the weight of the bicycle itself.

### SUMMARY OF THE INVENTION

Therefore, it is an object of the present invention to provide a manually driven bicycle which is capable of reducing the burden on the legs of the rider by the rider's own weight being utilized, in a case where the bicycle climbs the uphill slope.

In view of the above technical problems, according to an aspect of the invention, there is provided a bicycle comprises a body frame which fixedly supports a saddle, and rotatably supports rear and front wheels to transmit a driving force to said front wheel by pedaling a pedal by foot, further comprises a large gear which can be rotated integrally with said rear wheel and is provided concentrically with a rear wheel axle, and includes a diameter smaller than that of said rear wheel, a small gear which is provided so as to circumscribe said large gear at a level above the rear wheel axle, a small gear supporting bracket which is provided so as to swing about said rear wheel axle, and rotatably supports said small gear at its upper end, and includes a load receiving surface at its lower end, a load transmission unit which is downwardly movably supported to said body frame due to the downward load and adjustably movable in the longitudinal direction of the bicycle on said load receiving surface, a first sprocket which is provided concentrically with said small gear so as to be rotatable integrally with said small gear, a second sprocket which is rotatably provided at the position of the bicycle rear of said first sprocket and at the level lower than the rotation center of said first sprocket, a chain which is wound between said first and second sprockets to transmit the rotation force between said first and second sprockets, and a first rachet which is mounted on said small gear so as to restrict the rearward rotation of said rear wheel via said large gear, whereby the driving force can be transmitted to said rear wheel only by pedaling said pedal with said first rachet being disengaged from said small gear, while a physical burden on legs of a rider can be reduced by engaging said first rachet with said small gear to utilize the downward load, in accordance with the longitudinal position of said load receiving surface of said load transmission unit, in a case where the bicycle climbs an uphill slope.

In the bicycle with the above structure, based on the technical relationship between the large gear with the diameter smaller than that of the rear wheel which is provided concentrically with the rear wheel about the rear wheel axle so as to be rotated integrally with the rear wheel, and the small gear which is provided so as to circumscribe the large gear at a level higher than the rear wheel axle, the rider's own weight is transmitted to the rear wheel via the saddle, the load transmission unit, the load receiving surface of the load transmission unit, the small gear support bracket, the small gear, and the large gear mating with the small gear.

Since the first sprocket which can rotate concentrically with the small gear, the second sprocket the center of the rotation of which is set lower than that of the first sprocket, and the chain which transmits the rotation force between the first and second sprockets, in a case where the bicycle is caused to climb the uphill slope, the physical burden on the legs of the rider can be reduced by the downward load being utilized with the small gear being engaged by the first rachet, in accordance with the longitudinally adjusted position of the load receiving surface of the load transmission unit.

In a preferred embodiment of the present invention, said load transmission unit includes a L-shaped load transmission frame which is vertically swingably supported by said body frame, and a slide bracket which is interposed between said L-shaped load transmission frame and said small gear support bracket, L-shaped load transmission frame includes a horizontal part and a vertical part, a front end of said horizontal part is pivotably supported by a longitudinal upper frame portion of said body frame which said saddle is fixed to and extends in the longitudinal direction of the bicycle, said vertical part is vertically swingable and abuts against an upper end of said small gear support bracket, said vertical part includes at its lower end portion a first groove which extends in the longitudinal direction of the bicycle, said small gear support bracket is L-shaped so as include a vertical bar and a longitudinal bar extending in the longitudinal direction from a lower end of the vertical bar, said small gear is rotatably supported at the upper end portion of said vertical bar, a second groove extending in the longitudinal direction of the bicycle is provided on an upper surface of said longitudinal bar, said slide bracket includes a first roller which can roll on said first groove and a second roller which can roll on said second groove.

In a preferred embodiment of the present invention, an operation lever downwardly extending is provided near said saddle, and is rotatably supported at its intermediate portion by said body frame, and an extension member a front end of which is connected to the lower end portion of said operation lever is provided, whereby the longitudinal position of said slide bracket can be adjusted by the movement in the longitudinal direction of the operation lever, with said first and second rollers being rolled on said first and second grooves, respectively.

In a preferred embodiment of the present invention, a pair of said first rollers which are spaced apart from each other in the longitudinal direction are provided, and said second roller is a single roller.

In a preferred embodiment of the present invention, a lock pin which is vertically movable is provided on said operation lever, a group of lock grooves each of which extends in the direction perpendicular to the longitudinal direction of the bicycle are provided on said body frame, whereby an inclination angle of said operation lever can be held, depending on which the lock groove among said group of lock grooves said lock portion is locked against.

In a preferred embodiment of the present invention, said body frame includes a longitudinal lower frame portion to a front end of which a front sprocket connected to a rear sprocket via said chain and rotatable by said pedal, is rotatably supported, and to a rear end of which said rotation axis of said rear wheel rotatable integrally with said rear sprocket, is rotatably supported, a second sprocket support bar which is provided so as to be swingable about said rotation axis of said rear wheel and rotatably supports said second sprocket at its upper end portion, and a first spring which biases said second sprocket support bar in the backward direction of the bicycle are further provided, and a first rotation restriction member extending toward said second sprocket support bar is provided rear of a position of said longitudinal lower frame portion where said rotation axis of said rear wheel is supported.

In a preferred embodiment of the present invention, a second rotation restriction member extending upwardly is provided rear of a position where said longitudinal lower frame portion supports said rotation axis of said rear wheel to restrict the rotation of said small gear support bracket in the backward direction of the bicycle.

In a preferred embodiment of the present invention, said operation lever is rotatably supported at a position front of the rear axis of said longitudinal lower frame portion.

In a preferred embodiment of the present invention, a tension apply bracket one end of which a roller is provided on, the other end of which a spring is mounted on, is rotatably provided on said second sprocket support bar.

In a preferred embodiment of the present invention, said small gear is provided at the highest level of said large gear.

In a preferred embodiment of the present invention, a second rachet which restricts the rotation of said rear wheel in the backward direction of the bicycle is provided on said large gear, and on a rear end of said longitudinal lower frame portion.

In a preferred embodiment of the present invention, a loading platform is provided on a rear portion of said bicycle in such a way that its weight is transmitted to said load transmission unit.

In a preferred embodiment of the present invention, a pair of said small gear support brackets and a pair of said L-shaped load transmission frames are provided in such a way that each of said pair of said small gear support brackets is mounted on the corresponding side of said bicycle, and that said pair of said L-shaped load transmission frames is mounted on the corresponding side of said bicycle.

In a preferred embodiment of the present invention, an angular range of the rotation of each of said small gear support bracket and said L-shaped load transmission frame is set to be between 1 ° and 2 ° .

In a preferred embodiment of the present invention, a slit which vertically extends is provided on a lower end portion of said operation lever in such a way that a front end of said extension member is vertically movable via the slit.

In a preferred embodiment of the present invention, a space between said first sprocket and said second sprocket and/or a level at which said first sprocket is provided are set, in accordance with said downward load.

In a preferred embodiment of the present invention, a spring constant of said first spring is set, in accordance with a maximum expected inclination angle, in a case where the bicycle is caused to climb the uphill slope.

In a preferred embodiment of the present invention, the frontmost position of said slide bracket is set, in accordance with a maximum expected inclination angle in a case where the bicycle is caused to climb the uphill slope.

### BEST MODE FOR CARRYING OUT THE INVENTION

An embodiment of the bicycle of the present invention will be described in detail, with reference to drawings.

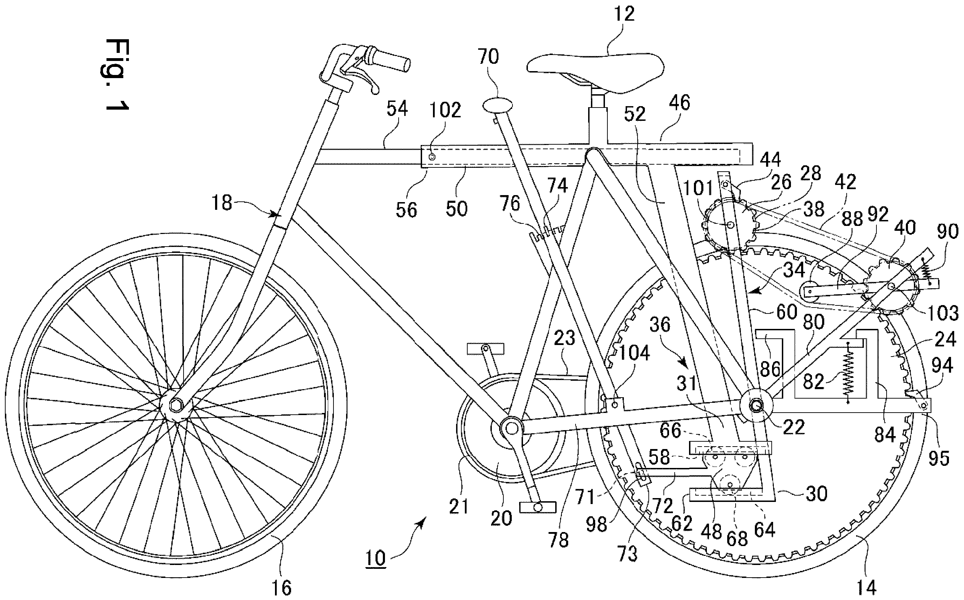

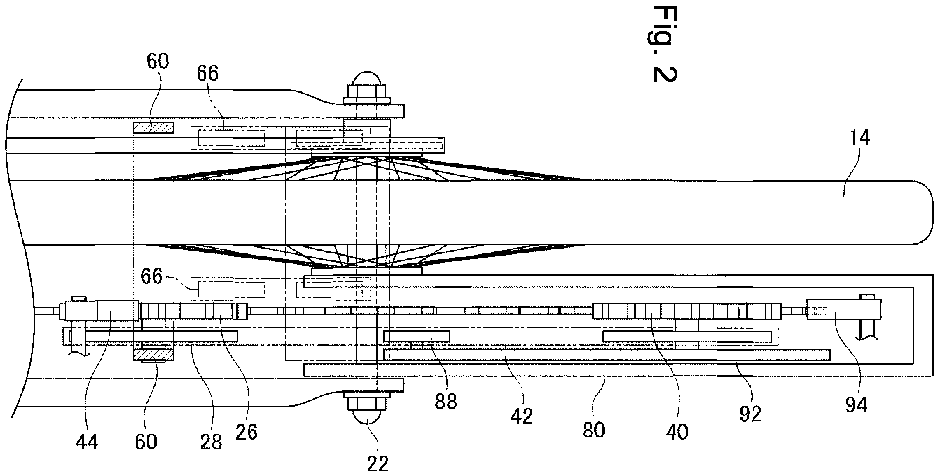

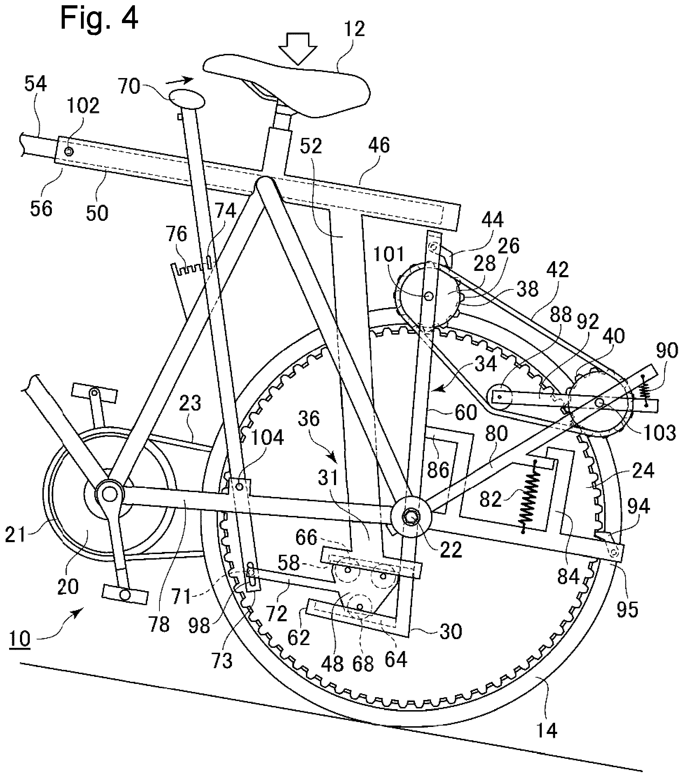

As shown in Figs. 1 to 4, the bicycle 10 includes a body frame 18, a front wheel 16 and a rear wheel 14.

More specifically, the bicycle 10 is the type that the body frame 18 the saddle 12 fixed on rotatably supports the rear wheel 14 and the front wheel 16, so that a driving force is applied to the rear wheel 14 by pedaling a pedal 20.

The body frame 18 includes a longitudinal lower frame portion 78 to a front end of which a front sprocket 21 connected to a rear sprocket via the chain 23 and rotatable by the pedal 20, is rotatably supported, and to a rear end of which a rear wheel axle 22 rotatable integrally with the rear sprocket, is rotatably supported.

Now, a large gear 24, a small gear 26, a small gear support bracket 34, a load transmission unit 36 and a sprocket mechanism which are the technical feature of the present invention will be explained about.

Material of above these elements may be any which is used for a conventional bicycle, a metal can be used, and a rigid plastic is preferred, in view of the lightness of the bicycle.

The large gear 24 is provided concentrically with the rear wheel 14 about the rear wheel axle 22 so as to be rotated integrally with the rear wheel 14. The large gear 24 includes a diameter smaller than that of the rear wheel.

The small gear 26 is provided at a level higher than the rotation axis 22 of the large gear 24 so as to mate with the large gear in a circumscribing manner. The small gear 26 is provided at the highest level of the large gear 24. As described below. the rate of the teeth number of the large gear 24 to that of the small gear 26 may be appropriately set, in view of the reduction of the physical burden on the legs when the bicycle is caused to climb the uphill slope.

A small gear support bracket 34 is provided so as to be swingable about the rear wheel axle 22 and to rotatably support the small gear 26 at the upper end portion 28 and to form a load receiving surface 32 at the lower end portion 30.

The small gear support bracket 34 is a L-shaped member including a vertical bar 60 and a longitudinal bar 62 which extends from the lower end of the vertical bar 60 to the front side of the bicycle 10.

The small gear 26 is rotatably supported at the upper end portion 28 of the vertical bar 60, and a second groove 64 which extends in the longitudinal direction of the bicycle 10 is provided on the load receiving surface 32 of the longitudinal bar 62.

A load transmission unit 36 is provided so as to be supported with being downwardly movable by the downward load (the weight of the rider, for example), and to be adjustably movable in the longitudinal direction of the bicycle 10 at the load receiving surface 32.

The load transmission unit 36 includes a L-shaped load transmission frame 46 which is supported so as to be vertically swingable by the body frame 18 and a slide bracket 48 which is interposed between the L-shaped load transmission frame 46 and the small gear support bracket 34. The L-shaped load transmission frame 46 includes a horizontal portion 50 and a vertical portion 52. A front end 56 of the horizontal portion 50 is pivotably supported by the vertical upper frame portion 54 of the body frame 18 which the saddle 12 is fixed to and extends in the longitudinal direction of the bicycle 10. The vertical portion 52 can be vertically swingable and includes at its lower end portion 21 a first groove 58 which extends in the longitudinal direction of the bicycle 10.

Each of the small gear support bracket 34 and the L-shaped load transmission frame 46 forms a pair which are connected to each other at the upper portions. Each of the pair of the small gear support 34 is provided on the corresponding one of the sides of the bicycle10. Each of the pair of the L-shaped load transmission frame 46 is provided on the corresponding one of the sides of the bicycle10.

The slide bracket 48 includes a first roller 66 which can roll on the first groove 58 and a second roller 68 which can roll on the second groove 64.

The first roller 66 forms a pair which are separated from each other on the longitudinal direction of the bicycle 10 at the upper portion of the slide bracket 48, while the second roller 68 forms a single at the lower portion of the slide bracket 48. This allows the slide bracket 48 to be adjustably moved in the longitudinal direction of the bicycle 10.

A first sprocket 38 is provided concentrically with the small gear 26 so as to be rotated integrally with the small gear 28.

A second sprocket 40 the rotation center of which is positioned at the level lower than that of the first sprocket 38 rear of the first sprocket 38.

A chain 42 is wound between the first sprocket 38 and the second sprocket 40 in such a way that the rotation force can be transmitted therebetween.

Further, a second sprocket support bar 80 is provided swingably about the rear wheel axle 22 and rotatably supports the second sprocket 40 at its upper end portion.

A first spring 82 is provided so as to bias the second sprocket support bar 80 in the backward direction of the bicycle10.

A tension apply bracket 92 is rotatably provided on the second sprocket support bar 80.

An abutting roller 88 and a tension apply spring 90 are rotatably provided at the one and the other ends of the tension apply bracket 92, respectively.

In view of the prevention of the smear of the rider's clothes due to the lubricant oil adhered to the chain 42, a cover (not shown) which covers the entirety of the chain 42 wound between the first sprocket 38 and the second sprocket 40, and transmitting the rotation force therebetween, may be preferably provided.

A first rachet 44 which restricts the rotation of the rear wheel 14 in the backward direction of the bicycle 10 via the large gear 24 is provided on the small gear 26.

As described below, by disengaging the first rachet 44 from the small gear 26, the driving force can be transmitted t the rear wheel 14 simply by the rider's pedaling the pedal 20, while, by engaging the first rachet 44 with the small gear 26, a physical burden on the legs can be reduced by the downward load being utilized, in accordance with the longitudinal position of the load receiving surface 32 of the load transmission unit 36, in a case where the bicycle 10 is caused to climb the uphill slope.

An operation lever 70 which downwardly extends is provided near the saddle 12.

An intermediate portion of the operation lever 70 is rotatably supported by the body frame 18, and an extension member 72 a front end 71 of which is connected to the lower end portion 73 of the operation lever 70 is provided, whereby the slide bracket 48 can be adjustably positioned in the longitudinal direction by the longitudinal movement of the operation lever 70 with the first roller 66 and the second roller 68 being moved the first groove 58 and the second groove 64 in a rolling manner, respectively.

A lock pin 74 which can be vertically moved is provided on the operation lever 70, while a group of lock grooves 76 each of which extends in the direction perpendicular to the longitudinal direction of the bicycle 10 are provided on the body frame 18.

An inclination angle of the operation lever 70 is held, depending on which groove among the group of the lock grooves 76 the lock pin 74 locks against.

The operation lever 70 is rotatably supported at a position front of the rear wheel axle 22 of the longitudinal lower frame portion 78. A slit 98 which vertically extends is provided on the lower end 73 of the operation lever 70, and the front end of the extension member 72 is provided vertically movably via the slit 98.

A first rotation restriction member 84 which extends toward the second sprocket support bar 80 at a position rear of the position where the longitudinal lower frame portion 78 supports the rear wheel axle 22.

A second rotation restriction member 86 which vertically extends is provided at a position rear of the position where the longitudinal lower frame portion 78 supports the rear wheel axle 22, and at a position front of the first rotation restriction member 84. The second rotation restriction member 86 restricts the rotation of the small gear support bracket 34 in the backward direction of the bicycle 10.

More specifically, with respect to the first rotation restriction member 84, as shown in Fig.1, the second sprocket support bar 80 is biased toward the right side ( the direction which the second sprocket support bar 80 is oriented horizontally) about the position where the rear wheel axle 22 is supported by the first spring 82.

More specifically, the first rotation restriction member 84 is adapted to restrict the further rotation in the clockwise direction by the upper end of the first rotation restriction member 84 engaging the side portion facing in the forwardly clockwise rotation direction of the second sprocket support bar 80.

On the other hand, with respect to the second rotation restriction member 86, as shown in Fig.1, in a case where the vertical bar 60 is caused to rotate in the clockwise direction about the support position of the rear wheel axle 22, the second rotation restriction member 86 restricts the further rotation in the clockwise direction of the vertical bar 80 by the upper end of the second rotation restriction member 86 abutting against the side portion in the forwardly clockwise rotation direction of the vertical bar 60.

This causes the first sprocket 38 to move toward the second sprocket 48, whereby the loosening of the chain 42 between the first and second sprockets 38, 40 is restricted.

The height of the upper end of each of the first and second rotation restriction members 84,86 may be appropriately set, and the longitudinal position of each of the upper end of the first and second rotation restriction members 84,86 may be appropriately set, in view of attaining the above functions.

A second rachet 94 which restricts the rotation in the direction in which the rear wheel 14 of the bicycle 10 is backwardly moved, is provided on the large gear 24, more specifically, the second rachet 94 is provided on the rear end 95 of the longitudinal lower frame portion 78.

The angular range of the rotation of each of the small gear support bracket 34 and the L-shaped load transmission frame 46 is set to be between 1° and 2° .

By setting the above angular range, the slide bracket 48 can be longitudinally moved by the fact that the first roller 16 rolls on the first groove 58, while at the same time, the second roller 68 rolls on the second groove 64, irrespective of the inclination of each of the small gear support bracket 34 and the L-shaped load transmission frame 46.

Alternatively, the span between the first sprocket 38 and the second sprocket 40 and/or the level of the first sprocket 38 may be preferably set, in accordance with the value of the downward load.

Alternatively, the spring constant of the first spring 82 may be preferably set, in accordance with the maximum expected inclination angle when the bicycle 10 is caused to climb the uphill slope.

Further alternatively, the frontmost position of the slide bracket 48 in the longitudinal direction of the bicycle 10 may be preferably set, in accordance with the maximum expected inclination angle when the bicycle 10 is caused to climb the uphill slope.

Further alternatively, the position of the saddle 12 or the distance between the support pin 102 and the saddle 12 may be preferably adjusted.

Further alternatively, the weight of the load platform 96 at the rear side of the bicycle 10 may be preferably transmitted to the load transmission unit 36.

The effect of the bicycle 10 with the above structure will be explained about, with reference to Figs. 1 to 4.

### (1) Case of drive on flat road

For example, in case where the bicycle 10 is caused to drove from a parking area, the bicycle 10 can be forwardly and backwardly move in a normal manner by the first rachet 44 and the second rachet 94 being disengaged from the small gear 26 and the large gear 24, respectively.

More specifically, the operation lever 70 is pressed toward the frontmost position in the longitudinal direction of the bicycle 10, so that the slide bracket 48 is moved toward the closest position to the vertical bar 60 of the small gear support bracket 34.

As a result, the small gear support bracket 34 is moved so as to forwardly fall down until the second sprocket support bar 80 and the first rotation restriction member 80 restricts such a movement via the chain 42. The saddle 12 and the rear wheel axle 22 are made to set free due to the fact that the first rachet 44 is disengaged from the small gear 26, the weight of the saddle 12 is transmitted via the slide bracket 48 to the small gear support bracket 34, and thus to the rear wheel axle 22, which is the normal operational situation of the conventional bicycle 10.

The small gear 26 is positioned at the upper vertical level relative to the ground surface by the small gear support bracket 34, while the slide bracket 48 is positioned the closest to the vertical bar 60 in the vertical bar 62 of the small support bracket 34, under the condition that no load is burdened.

The weight of the rider is transmitted to the L-shaped load transmission frame 46 via the saddle 12, the L-shaped load transmission frame 46 is downwardly moved about the frame pin 102, so that the slide bracket 48 is also downwardly moved, since the slide bracket 48 which is slidable on the second groove 64 provided on the lower end surface of the L-shaped load transmission frame 46 via the second roller 68, is provided so as to be vertically movable on the slit 98 provided on the lower portion of the operation lever 70.

The small gear support bracket 34 is rotated about the rear wheel axle 22 by the downward movement of the slide bracket 48, while at the same time, the vertical bar 60 is rotated in the left direction by the downward movement of the longitudinal bar 62, whereby the balancing of the small gear 26 is started with being rotatably supported on the end portion of the small gear support bracket 34.

The small gear 26 is prevented from rotating in the counter-clockwise direction by the first rachet 44, and is caused to move in a reciprocating manner within a gap D between the second rotation restriction member 86 and the small gear support bracket 34, and finally held at a self-stable position.

### (2) Case of climbing uphill slope

The operation lever 70 is held at a desired angular position by being backwardly moved, in accordance with the inclination angle of the uphill slope, to be fitted into the desired position of the selected groove among the group of lock grooves 76.

This causes the slide bracket 48 to slide from the rearmost position of the bicycle 10 to the predetermined front position, with the first roller 66 and the second roller 68 rolling on the first groove 58 and the second groove 64, respectively.

In accordance with the rate of the distance between the center of the rear wheel axle 22 and the load applied point to the distance between the center of the rear wheel axle 22 and the center of the small gear 26, load derived from the weight of the rider is exerted on the small gear 26 on the small gear support bracket 34, based on the principle of leverage.

The rear wheel 14 is prevented from backwardly rotating by the second rachet 94, while the second sprocket 40 is caused to rotate in the direction in which the bicycle is downwardly moved by the fact that the second sprocket support bar 80 is biased by the first spring 82 so as to downwardly move the second sprocket 40, while at the same time, the weight of the second sprocket 40 works. Such a rotation force is transmitted to the small gear 26 via the chain 42.

In this connection, the downward movement of the second sprocket 40 is limited to a certain range by the second rotation restriction member 86.

The small gear 26 is caused to rotate about the support portion of the rotation of the small gear support bracket 34 at a position where the small gear 26 is kept balanced, so that rear wheel 14 mating with the small gear 26 is caused to rotate in the direction in which the bicycle 10 climbs the uphill slope. This causes the climbing operation by pedaling to be alleviated.

In such a case, the tension apply bracket92, which includes at its one end a tension apply spring 90 and at its other end an abutting roller 88, is biased toward the second sprocket support bar 80, so that the rotation force of the second sprocket 40 is transmitted to the small gear 26 via the chain 42, without the loosening of the chain 42 being caused, by the abutting roller 88 applying the tension to the chain 42.

When the rider got off the bicycle 10, the weight of the rider is removed, so that the small gear support bracket 34 is caused to move on the right direction about to the rear wheel axle 22, as a result, the small gear 26 is caused to move toward the second sprocket 40, whereby the chain 42 is caused to loosen, the second rotation restriction member 86 is provided in order to limit the movement of the small gear 26 within a certain range.

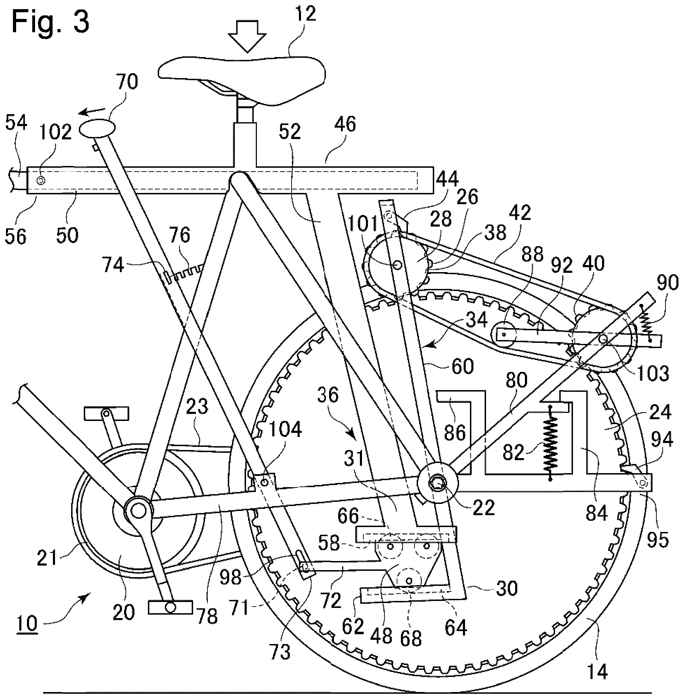

As clearly shown in Figs. 1 to 3, when the rider seats on the saddle 12, the vertical portion 52 downwardly moves, and such a downward movement is transmitted to the lower end portion 30 of the small gear support bracket 34 via the second roller 68. When the lower end portion 30 is downwardly pressed, the upper end portion 28 of the small gear support bracket 34 is pressed in a seesaw operation in the direction in which the bicycle 10 forwardly moves (left direction in Fig.3) about the rear wheel axle 22.

Since the first rachet 44 restricts the rotation of the rear wheel 14 in the direction in which the bicycle 10 rearwardly moves, the rotation of the small gear 26 in the counter-clockwise direction (Fig.3) is restricted. As a result, the large gear 24 mating with the small gear 26 is pressed in the direction in which the bicycle forwardly moves by the function of the upper end portion 28 of the small gear support bracket 34, with the rotation of the small gear 26 in the counter-clockwise direction being restricted, so that the rear wheel 14 is caused to rotate in the direction in which the bicycle 10 forwardly moves.

In short, the small gear 26 is caused to downwardly move in the left direction (Fig.3) along the outer peripheral of the large gear 24 without slipping relative to the large gear 24 on the spot, with the teeth of the small gear 26 being mated with the teeth of the large gear, the large gear is caused to move in the left direction, in other words, the rear wheel is caused to rotate in the direction in which the bicycle 10 forwardly moves.

Accordingly, in a case where the bicycle 10 is caused to climb the uphill slope, by engaging the first rachet 44 with the small gear 26 to restrict the rear wheel 14 to rotate in the direction in which the bicycle 10 rearwardly moves, a burden on the legs of the rider can be reduced by the downward load being utilized, in accordance with the position of the load receiving surface 32 of the load transmitting unit 36 in the longitudinal direction of the bicycle 10.

In the bicycle with the above structure, based on the technical relationship between the large gear 24 with the diameter smaller than that of the rear wheel 14 which is provided concentrically with the rear wheel 14 about the rear wheel axle 22 so as to be rotated integrally with the rear wheel 14 and the small gear 26 which is provided so as to circumscribe the large gear 24 at a level higher than the rear wheel axle 22, the rider's own weight is transmitted to the rear wheel 14 via the saddle, the load transmission unit 36, the load receiving surface 32 of the load transmission unit 36, the small gear support bracket 34, the small gear 26, and the large gear 24 mating with the small gear 26.

Since the first sprocket 38 which can rotate concentrically with the small gear 26, the second sprocket 40 the center of the rotation of which is set lower than that of the first sprocket 38, and the chain 42 which transmit the rotation force between the first and second sprockets, in a case where the bicycle 10 is caused to climb the uphill slope, the physical burden on the legs can be reduced by the downward load being utilized, in accordance with the longitudinally adjusted position of the load receiving surface 32 of the load transmission unit 36.

The embodiment of the present invention has been described in detail above. A person skilled in the art may make various modifications and changes insofar as they are not out of the scope of the present invention.

For example, in the embodiment, it is described that the small gear 26 circumscribes the large gear 24. However, the present invention clearly encompasses a case where the small gear 26 inscribes the large gear 24.

For example, in the embodiment, it is described that the small gear 26 is located at the highest level of the large gear 24. However, the present invention clearly encompasses a case where the small gear 26 is located above the rear wheel axle 22.

An object of the present invention is to provide a manually driven bicycle which is capable of reducing the burden on the legs of the rider, in a case where the bicycle climbs the uphill slope by the rider's own weight being utilized.

There is provided an air conditioner comprising a bicycle comprises a body frame which fixedly supports a saddle, and rotatably supports rear and front wheels to transmit a driving force to said front wheel by pedaling a pedal by foot, further comprises a large gear which can be rotated integrally with said rear wheel and is provided concentrically with a rear wheel axle, and includes a diameter smaller than that of said rear wheel, a small gear which is provided so as to circumscribe said large gear at a level above the rear wheel axle , a small gear supporting bracket which is provided so as to swing about said rear wheel axle, and rotatably supports said small gear at its upper end, and includes a load receiving surface at its lower end, a load transmission unit which is downwardly movably supported to said body frame due to the downward load and adjustably movable in the longitudinal direction of the bicycle on said load receiving surface, a first sprocket which is provided concentrically with said small gear so as to be rotatable integrally with said small gear, a second sprocket which is rotatably provided at the position of the bicycle rear of said first sprocket and at the level lower than the rotation center of said first sprocket, a chain which is wound between said first and second sprockets to transmit the rotation force between said first and second sprockets, and a first rachet which is mounted on said small gear so as to restrict the rearward rotation of said rear wheel via said large gear.

### BRIEF DESCRIPTION OF THE DRAWINGS

FIG.1 is a left side view illustrating the bicycle 10 according to the embodiment of the present invention.
FIG.2 is a partial plan view illustrating the bicycle 10 according to the embodiment of the present invention.
FIG.3 is a partial view illustrating the bicycle 10 according to the embodiment of the present invention in a case where the bicycle is run on a flat road.
FIG.4 is a partial view illustrating the bicycle 10 according to the embodiment of the present invention in a case where the bicycle climbs an uphill slope.

## Claims

1. A bicycle comprises a body frame which fixedly supports a saddle, and rotatably supports rear and front wheels to transmit a driving force to said front wheel by pedaling a pedal by foot, further comprises a large gear which can be rotated integrally with said rear wheel and is provided concentrically with said rear wheel about a rear wheel axle, and includes a diameter smaller than that of said rear wheel,
a small gear which is provided so as to circumscribe said large gear at a level above the rear wheel axle,
a small gear supporting bracket which is provided so as to swing about said rear wheel axle, and rotatably supports said small gear at its upper end, and includes a load receiving surface at its lower end,
a load transmission unit which is downwardly movably supported to said body frame due to the downward load and adjustably movable in the longitudinal direction of the bicycle on said load receiving surface,
a first sprocket which is provided concentrically with said small gear so as to be rotatable integrally with said small gear,
a second sprocket which is rotatably provided at the position of the bicycle rear of said first sprocket and at the level lower than the rotation center of said first sprocket,
a chain which is wound between said first and second sprockets to transmit the rotation force between said first and second sprockets, and
a first rachet which is mounted on said small gear so as to restrict the rearward rotation of said rear wheel via said large gear,
whereby the driving force can be transmitted to said rear wheel only by pedaling said pedal with said first rachet being disengaged from said small gear, while a physical burden on legs of a rider can be reduced by engaging said first rachet with said small gear to utilize the downward load, in accordance with the longitudinal position of said load receiving surface of said load transmission unit, in a case where the bicycle climbs an uphill slope.

2. The bicycle according to claim 1, wherein said load transmission unit includes a L-shaped load transmission frame which is vertically swingably supported by said body frame, and a slide bracket which is interposed between said L-shaped load transmission frame and said small gear support bracket, L-shaped load transmission frame includes a horizontal part and a vertical part, a front end of said horizontal part is pivotably supported by a longitudinal upper frame portion of said body frame which said saddle is fixed to and extends in the longitudinal direction of the bicycle, said vertical part is vertically swingable and abuts against an upper end of said small gear support bracket, said vertical part includes at its lower end portion a first groove which extends in the longitudinal direction of the bicycle, said small gear support bracket is L-shaped so as include a vertical bar and a longitudinal bar extending in the longitudinal direction from a lower end of the vertical bar, said small gear is rotatably supported at the upper end portion of said vertical bar, a second groove extending in the longitudinal direction of the bicycle is provided on an upper surface of said longitudinal bar, said slide bracket includes a first roller which can roll on said first groove and a second roller which can roll on said second groove.

3. The bicycle according to claim 2, wherein an operation lever downwardly extending is provided near said saddle, and is rotatably supported at its intermediate portion by said body frame, and an extension member a front end of which is connected to the lower end portion of said operation lever is provided, whereby the longitudinal position of said slide bracket can be adjusted by the movement in the longitudinal direction of the operation lever, with said first and second rollers being rolled on said first and second grooves, respectively.

4. The bicycle according to claim 3, wherein a pair of said first rollers which are spaced apart from each other in the longitudinal direction are provided, and said second roller is a single roller.

5. The bicycle according to claim 3 or claim 4, wherein a lock pin which is vertically movable is provided on said operation lever, a group of lock grooves each of which extends in the direction perpendicular to the longitudinal direction of the bicycle are provided on said body frame, whereby an inclination angle of said operation lever can be held, depending on which the lock groove among said group of lock grooves said lock portion is locked against.

6. The bicycle according to claim 5, wherein said body frame includes a longitudinal lower frame portion to a front end of which a front sprocket connected to a rear sprocket via said chain and rotatable by said pedal, is rotatably supported, and to a rear end of which said rotation axis of said rear wheel rotatable integrally with said rear sprocket, is rotatably supported, a second sprocket support bar which is provided so as to be swingable about said rotation axis of said rear wheel and rotatably supports said second sprocket at its upper end portion, and a first spring which biases said second sprocket support bar in the backward direction of the bicycle are further provided, and a first rotation restriction member extending toward said second sprocket support bar is provided rear of a position of said longitudinal lower frame portion where said rotation axis of said rear wheel is supported,
wherein preferably a space between said first sprocket and said second sprocket and/or a level at which said first sprocket is provided are set, in accordance with said downward load,
wherein further preferably a spring constant of said first spring is set, in accordance with a maximum expected inclination angle, in a case where the bicycle is caused to climb the uphill slope, and
wherein further preferably the frontmost position of said slide bracket is set, in accordance with a maximum expected inclination angle in a case where the bicycle is caused to climb the uphill slope.

7. The bicycle according to claim 6 wherein a second rotation restriction member extending upwardly is provided rear of a position where said longitudinal lower frame portion supports said rotation axis of said rear wheel to restrict the rotation of said small gear support bracket in the backward direction of the bicycle.

8. The bicycle according to claim 1, wherein said operation lever is rotatably supported at a position front of the rear axis of said longitudinal lower frame portion.

9. The bicycle according to any of claims 1 to 8, wherein a tension apply bracket one end of which a roller is provided on, the other end of which a spring is mounted on, is rotatably provided on said second sprocket support bar.

10. The bicycle according to claim 1, wherein said small gear is provided at the highest level of said large gear.

11. The bicycle according to claim 1, wherein a second rachet which restricts the rotation of said rear wheel in the backward direction of the bicycle is provided on said large gear, and on a rear end of said longitudinal lower frame portion.

12. The bicycle according to claim 1, wherein a loading platform is provided on a rear portion of said bicycle in such a way that its weight is transmitted to said load transmission unit.

13. The bicycle according to claim 1, wherein a pair of said small gear support brackets and a pair of said L-shaped load transmission frames are provided in such a way that each of said pair of said small gear support brackets is mounted on the corresponding side of said bicycle, and that said pair of said L-shaped load transmission frames is mounted on the corresponding side of said bicycle.

14. The bicycle according to claim 1, wherein an angular range of the rotation of each of said small gear support bracket and said L-shaped load transmission frame is set to be between 1 ° and 2 ° .

15. The bicycle according to claim 14, wherein a slit which vertically extends is provided on a lower end portion of said operation lever in such a way that a front end of said extension member is vertically movable via the slit.
